(19)

**Europäisches Patentamt**
**European Patent Office**
**Office européen des brevets**

(11) **EP 2 317 853 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(21) Anmeldenummer: **09777414.5**

(22) Anmeldetag: **24.07.2009**

(51) Int Cl.:
*A01N 43/653* (2006.01)        *A01N 49/00* (2006.01)
*A01N 37/42* (2006.01)        *A01P 21/00* (2006.01)

(86) Internationale Anmeldenummer:
**PCT/EP2009/005376**

(87) Internationale Veröffentlichungsnummer:
**WO 2010/015337 (11.02.2010 Gazette 2010/06)**

(54) **VERWENDUNG VON AZOLEN ZUR STEIGERUNG DER RESISTENZ VON PFLANZEN ODER PFLANZENTEILEN GEGENÜBER ABIOTISCHEM STRESS**

USE OF AZOLES FOR INCREASING THE ABIOTIC STRESS RESISTANCE OF PLANTS OR PLANT PARTS

UTILISATION D'AZOLES POUR AUGMENTER LA RÉSISTANCE DE PLANTES OU DE PARTIES DE PLANTES AUX STRESS ABIOTIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.08.2008 EP 08013890**

(43) Veröffentlichungstag der Anmeldung:
**11.05.2011 Patentblatt 2011/19**

(73) Patentinhaber: **Bayer Intellectual Property GmbH 40789 Monheim am Rhein (DE)**

(72) Erfinder:
• DITTGEN, Jan
  60316 Frankfurt (DE)
• HÄUSER-HAHN, Isolde
  51375 Leverkusen (DE)
• KEHNE, Heinz
  65719 Hofheim (DE)
• LEHR, Stefan
  65835 Liederbach (DE)
• TIEBES, Jörg
  60431 Frankfurt (DE)
• BUSCH, Marco
  51399 Burscheid-Ösinghausen (DE)

(74) Vertreter: **BIP Patents
c/o Bayer Intellectual Property GmbH
Alfred-Nobel-Straße 10
40789 Monheim am Rhein (DE)**

(56) Entgegenhaltungen:
EP-A2- 0 348 767        WO-A1-2007/008580
WO-A1-2007/093535        WO-A2-02/083732
CA-A1- 2 119 806        GB-A- 2 313 595

• Y-X WU ET AL: "Impact of fungicides on active oxygen species and antioxidant enzymes in spring barley (Hordeum vulgare L.) exposed to ozone" ENVIRONMENTAL POLLUTION, BARKING, GB, Bd. 116, 1. Januar 2002 (2002-01-01), Seiten 37-47, XP002437764 ISSN: 0269-7491 in der Anmeldung erwähnt
• M. J. MORRISON & C. J. ANDREWS: "Variable increases in cold hardiness induced in winter rape by plant growth regulators" J. PLANT GROWTH REGULATION, Bd. 11, 1992, Seiten 113-117, XP002562961 in der Anmeldung erwähnt
• DATABASE WPI Week 200403 Thomson Scientific, London, GB; AN 2004-027378 XP002562962 & JP 2003 325063 A (OJI PAPER CO) 18. November 2003 (2003-11-18) in der Anmeldung erwähnt
• KITAHATA N ET AL: "Chemical regulation of abscisic acid catabolism in plants by cytochrome P450 inhibitors" BIOORGANIC & MEDICINAL CHEMISTRY, ELSEVIER SCIENCE, OXFORD, GB, Bd. 13, Nr. 14, 15. Juli 2005 (2005-07-15), Seiten 4491-4498, XP004928364 ISSN: 0968-0896 in der Anmeldung erwähnt

<u>Bemerkungen:</u>
Die Akte enthält technische Angaben, die nach dem Eingang der Anmeldung eingereicht wurden und die nicht in dieser Patentschrift enthalten sind.

<u>Bemerkungen:</u>
Die Akte enthält technische Angaben, die nach dem Eingang der Anmeldung eingereicht wurden und die nicht in dieser Patentschrift enthalten sind.

**Beschreibung**

Die Erfindung betrifft die Verwendung von bestimmten Azolverbindungen in Kombination mit Abscisinsäure zur Steigerung der Widerstandsfähigkeit von Pflanzen gegenüber abiotischen Stressfaktoren. Weiterer Gegenstand der vorliegenden Erfindung ist eine Spritzlösung, welche bestimmte Azolverbindungen sowie als weiteren Bestandteil Abscisinsäure enthält und zur Steigerung der Widerstandsfähigkeit von Pflanzen gegenüber abiotischen Stressfaktoren verwendet werden kann. Schließlich betrifft die vorliegende Erfindung auch ein Verfahren zur Behandlung von Pflanzen oder Pflanzenteilen zur Steigerung der Widerstandsfähigkeit gegenüber abiotischen Stressfaktoren.

Bei möglichen Ursachen für Pflanzenschädigungen muss prinzipiell zwischen biotischen und abiotischen Ursachen unterschieden werden. Die meisten der biotischen Ursachen von Pflanzenschädigungen sind bekannte Schaderreger, welche durch chemische Pflanzenschutzmaßnahmen und durch Resistenzzüchtung kontrolliert werden können. Abiotischer Stress demgegenüber ist die Wirkung von einzelnen oder kombinierten Umweltfaktoren (insbesondere Frost, Kälte, Hitze und Trockenheit) auf den Metabolismus der Pflanze, die eine ungewöhnliche Belastung für den Organismus darstellt. Toleranz gegenüber abiotischem Stress bedeutet in diesem Zusammenhang, dass Pflanzen in der Lage sind, die Stresssituation unter weitgehender Beibehaltung ihrer Leistungsfähigkeit zu ertragen bzw. mit geringeren Schädigungen zu überstehen, als sie an entsprechenden, streßsensitiveren Kontrollen zu beobachten sind.

Das Wirken moderater Stresse über längere Zeiträume oder kurzzeitiger extremer Stresse kann zu irreversiblen Schädigungen bis hin zum Absterben der Pflanzen führen. Abiotische Stressfaktoren sind damit in erheblichem Maße für Ernetausfälle verantwortlich bzw. führen dazu, dass Durchschnittsernten oft deutlich unter dem maximal möglichen Ertrag liegen (Bray et al.: "Responses to Abiotic Stresses", in: Buchanan, Gruissem, Jones (eds.) "Biochemistry and Molecular Biology of Plants", Seiten 1158 bis 1203, American Society of Plant Physiologists, 2000).

Es ist bekannt, daß chemische Substanzen die Toleranz von Pflanzen gegen abiotischen Stress erhöhen können. Derartige Effekte, die häufig auch mit einer Ertragssteigerung einhergehen, werden u.a. auch bei Anwendung von bestimmten Fungiziden beobachtet und konnten für die Gruppe der Strobilurine gezeigt werden (Bartlett et al., 2002, Pest Manag Sci 60: 309).

Auch für einige Azolverbindungen konnte bereits eine streßresistenz-fördernde Wirkung gezeigt werden. Diese beschränkt sich bisher jedoch auf Azole eines bestimmten Strukturtyps (z.B. Methylazole); auf Azole in Kombination mit Abscisinsäure (ABA); auf Azole, die signifikante Wuchsdepressionen an den behandelten Pflanzen hervorrufen; auf Anwendungen der Azole in der Saatgut- bzw. Keimlingsbehandlung und die Verminderung von Schadeffekten, die durch künstliche Ozonbegasung hervorgerufen werden (siehe beispielsweise WO 2007/008580 A; Imperial Chemical Industries PLC, 1985, Research Disclosure 259: 578-582; CA 211 98 06; JP 2003/325063 A; Wu and von Tiedemann, 2002, Environmental Pollution 116: 37-47).

Desweiteren wurden Effekte von Wachstumsregulatoren auf die Stresstoleranz von Kulturpflanzen beschrieben, darunter auch das als Wachstumsregulator verwendete Methylazol Paclobutrazol (Morrison and Andrews, 1992, J Plant Growth Regul 11: 113-117; Imperial Chemical Industries PLC, 1985, Research Disclosure 259: 578-582).

Die Wirkung von Abscisinsäure (ABA) als Pflanzenhormon ist in einer Vielzahl von physiologischen Prozessen beschrieben. So wirkt ABA beispielsweise als "Stresshormon", dessen Bildung u.a. bei Trockenstreß induziert wird und u.a. eine Hemmung der stomatären Transpiration (Schließen der Stomata) vermittelt (Schopfer, Brennicke: "Pflanzenphysiologie", 5. Auflage, Springer, 1999). Dadurch ist die Pflanze toleranter gegenüber Trockenstreß.

In zahlreichen Beispielen wurde gezeigt, daß durch exogene Applikation von Abscisinsäure die Stressempfindlichkeit von Pflanzen reduziert bzw. die Stresstoleranz erhöht werden kann (Jones and Mansfield, 1970, J. Exp. Botany 21: 714-719; Bonham-Smith et al., 1988, Physiologia Plantarum 73: 27-30). Desweiteren konnte gezeigt werden, daß auch ABA-analoge Strukturen dazu in der Lage sind, ABA-vergleichbare Pflanzenantworten auszulösen (Churchill et al., 1998, Plant Growth Regul 25: 35-45; Huang et al., 2007, Plant J 50: 414-428). Auch die streßtoleranz-erhöhende Wirkung von ABA-Analogen in Kombination mit Wachstumshemmern wurde bereits beschrieben (DE 38 215 20 A).

Die fungizide Wirkung von Azolen, wie Tebuconazol und Prothioconazol ist bekannt und beruht auf der Inhibition der Sterol C14-Demethylase, einem zentralen Enzym der Sterolbiosynthese (Kuck & Vors: "Sterol Biosynthesis Inhibitors", in: Krämer & Schirmer (eds.) "Modern Crop Protection Compounds", Vol. 2, Seiten 605 bis 650, Wiley-VCH, 2007).

Neben der Sterol-C14-Demethylase werden jedoch auch andere Enzyme des gleichen Typs (sog. P450-Monooxygenasen) durch Vertreter dieser Stoffklassen inhibiert. Beispielsweise führen viele dieser Moleküle durch Inhibition der ent-Kauren-Oxidase nach Applikation auch zu starken Stauchungen der Pflanzen, da somit die Biosynthese von Gibberellinsäure inhibiert wird, einem Pflanzenhormon, welches u.a. an der Regulation von Wachstumsprozessen beteiligt ist (Buchenauer: "DMI-fungicides - side effects on the plant and problems of resistance, in: Lyr (ed.) "Modern Selective Fungicides", 2nd ed., p.259-290, Gustav Fischer Verlag, 1995). Einige Vertreter dieser Substanzklassen wurden zudem auch als Inhibitoren des Abscisinsäurekatabolismus (speziell der ABA-Hydroxylierung durch ABA-8'-Hydroxylase) beschrieben (Kitahata et al., 2005, Bioorg. Med. Chem. 13: 4491-4498; Saito et al., 2006, Biosci. Biotechnol. Biochem. 70: 1731-1739; Zhang et al., 2007, Journal of Plant Physiology 164: 709-717). Die dort beschriebenen Substanzen Diniconazol und Uniconazol führen jedoch an einigen Kulturpflanzen, wie beispielsweise Raps, in unerwünschtem Maße zu Stauchungen. Die Verwendung dieser sowie einiger anderer Azole in Kombination mit Abscisinsäure zur Erhögung der pflanzlichen Resistenz gegenüber abiotischem Streß ist in der WO2007/008580 A beschrieben.

JP 2003-325063 offenbart die Verwendung von einigen Azolen zur Behandlung von Keimlingen, welche mittels einer Vorrichtung in den Boden gepflanzt werden. Die dort beschriebenen Erkenntnisse sind nicht auf eine Behandlung von Pflanzen oder Pflanzenteilen zur Erhöhung der Widerstandsfähigkeit gegenüber abiotischem Stress übertragbar da die Substanzen bei Samen und Keimlingen auf andere pflanzliche Strukturen, Organe und Gewebe wirken (so sind beispielsweise Kotyledonen physiologisch und morphologisch ungleich Laubblättern) und werden auch über unterschiedliche Wege aufgenommen (Samenkorn bzw Keimlingsgewebe gegenüber Wachsschicht und Blattgewebe einer weiter entwickelten Pflanze).

Ausgehend von diesem Stand der Technik stellt sich die vorliegende Erfindung die Aufgabe, weitere Wirkstoffe aufzufinden, welche eine Steigerung der Resistenz der Pflanze gegenüber abiotischen Stressfaktoren bewirken und dabei vorzugsweise zu keinen oder signifikant geringeren Stauchungen der Kulturpflanzen führen als beispielsweise Diniconazol und Uniconazol.

Dazu wurden mehrere Azolverbindungen, für die bisher noch keine entsprechenden Effekte beschrieben wurden, auf ihre streßresistenzfördernde Wirkung auf Kulturpflanzen nach Sprühapplikation untersucht.

Dabei wurde ein bisher noch unbekannter positiver Effekt von Tebuconazol und Prothioconazol auf die Streßtoleranz von Kulturpflanzen gefunden.

Für Tebuconazol ist dies überraschend, da Tebuconazol im deutlichen Gegensatz zu Uniconazol und Diniconazol in bisherigen Studien je nach Testsystem keine bzw. nur eine geringfügig inhibierende Wirkung auf den Abscisinsäurekatabolismus bzw. die ABA-8'-Hydroxylase aufwies (Kitahata et al., 2005, Bioorg. Med. Chem. 13: 4491-4498; Saito et al., 2006, Biosci. Biotechnol. Biochem. 70: 1731-1739). Eine entsprechende streßtoleranzfördernde Wirkung war also aufgrund des Standes der Technik für Tebuconazol daher nicht zu erwarten. Die Befunde lassen daher darauf schließen, dass die entsprechende Wirkung nicht über die Inhibition des Abscisinsäurekatabolismus bzw der ABA-8'Hydroxylase, sondern über einen anderen Wirkmechanismus zustande kommt.

Für Prothioconazol ist die streßtoleranzfördernde Wirkung überraschend, da es sich bei dieser Verbindung um ein Azolthion handelt, sie sich also strukturell deutlich von den bisher beschriebenen Verbindungen zur Erhöhung der Widerstandsfähigkeit gegenüber abiotischem Stress unterscheidet. Beide Verbindungen führen zudem zu wesentlich geringeren Stauchungen an Kulturpflanzen als beispielsweise Uniconazol oder Diniconazol.

Der streßtoleranzfördernde Effekt von Tebuconazol und Prothioconazol ist somit also auch deutlich stärker, als man es bei einer linearen Korrelation von wachstumsregulatorischer Wirkung bzw. Stauchung und Streßtoleranz erwarten würde. Diese Befunde lassen daher also weiterhin darauf schließen, dass die entsprechende Wirkung von Tebuconazol und Prothioconazol nur in geringem bis nicht signifikantem Maße über die Stauchung der Kulturpflanzen vermittelt wird.

Unter der Bezeichnung Resistenz bzw. Widerstandsfähigkeit gegenüber abiotischem Stress werden im Rahmen der vorliegenden Erfindung verschiedenartige Vorteile für Pflanzen verstanden, die nicht unmittelbar mit der bekannten pestiziden Wirksamkeit, bevorzugt der fungiziden Wirksamkeit der Azolverbindungen verbunden sind. Solche vorteilhaften Eigenschaften äußern sich beispielsweise in den nachfolgend genannten verbesserten Pflanzencharakteristika: verbessertes Wurzelwachstum hinsichtlich Oberfläche und Tiefe, vermehrte Ausläuferbildung oder Bestockung, stärkere und produktivere Ausläufer und Bestockungstriebe, Verbesserung des Sproßwachstums, erhöhte Standfestigkeit, vergrößerte Sprossbasisdurchmesser, vergrößerte Blattfläche, höhere Erträge an Nähr- und Inhaltsstoffen, wie z.B. Kohlenhydrate, Fette, Öle, Proteine, Vitamine, Mineralstoffe, ätherische Öle, Farbstoffe, Fasern, bessere Faserqualität, früheres Blühen, gesteigerte Blütenanzahl, reduzierter Gehalt an toxischen Produkten wie Mycotoxine, reduzierter Gehalt an Rückständen oder unvorteilhaften Bestandteilen jeglicher Art oder bessere Verdaulichkeit, verbesserte Lagerstabilität des Erntegutes, verbesserter Toleranz gegenüber unvorteilhaften Temperaturen, verbesserter Toleranz gegenüber Dürre und Trockenheit, wie auch Sauerstoffmangel durch Wasserüberschuß, verbesserte Toleranz gegenüber erhöhten Salzgehalten in Böden und Wasser, gesteigerte Toleranz gegenüber Ozonstress, verbesserte Verträglichkeit gegenüber Herbiziden und anderen Pflanzenbehandlungsmitteln, verbesserte Wasseraufnahme und Photosyntheseleistung, vorteilhafte Pflanzeneigenschaften, wie beispielsweise Beschleunigung der Reifung, gleichmäßigere Abreife, größere Anziehungskraft für Nützlinge, verbesserte Bestäubung oder andere Vorteile, die einem Fachmann durchaus bekannt sind.

Zu den dabei relativierbaren abiotischen Streßbedingungen können zum Beispiel Dürre, Kälte- und Hitzebedingungen, osmotischer Streß, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen zählen.

Insbesondere zeigt die erfindungsgemäße Verwendung in der Sprühapplikation auf Pflanzen und Pflanzenteilen die beschriebenen Vorteile. Kombinationen von den entsprechenden Azolverbindungen unter anderem mit Insektiziden, Fungiziden und Bakteriziden können bei der Bekämpfung von Pflanzenkrankheiten im Rahmen der vorliegenden Erfindung ebenfalls Anwendung finden. Die kombinierte Verwendung von entsprechenden Azolverbindungen mit gentechnisch veränderten Sorten in Bezug auf erhöhte abiotische Stresstoleranz ist darüber hinaus ebenfalls möglich.

Im Rahmen der vorliegenden Erfindung wird unter einer Pflanze vorzugsweise eine Pflanze ab dem Stadium der Blattentwicklung verstanden (ab dem Stadium BBCH 10 gemäß der BBCH-Monografie der Biologische Bundesanstalt für Land und Forstwirtschaft, 2. Auflage, 2001). Insbesondere wird unter dem Begriff der Pflanze im Rahmen der vorliegenden Erfindung kein Saatgut oder Keimling verstanden.

Die weiter oben genannten verschiedenartigen Vorteile für Pflanzen lassen sich bekannterweise partiell zusammenfassen und mit allgemein gültigen Begriffen belegen. Soche Begriffe sind beispielsweise die nachfolgend aufgeführten Bezeichnungen: phytotonischer Effekt, Widerstandsfähigkeit gegenüber Stressfaktoren, weniger Pflanzenstress, Pflanzengesundheit, gesunde Pflanzen, Pflanzenfitness, ("Plant Fitness"), "Plant Wellness", "Plant Concept", "Vigor Effect", "Stress Shield", Schutzschild, "Crop Health", "Crop Health Properties", "Crop Health Products", "Crop Health Management", "Crop Health Therapy", "Plant Health", Plant Health Properties", Plant Health Products", "Plant Health Management", "Plant Health Therapy", Grünungseffekt ("Greening Effect" oder "Re-greening Effect"), "Freshness" oder andere Begriffe, die einem Fachmann durchaus bekannt sind. Im Rahmen der vorliegenden Erfindung wird unter einem guten Effekt auf die Widerstandsfähigkeit gegenüber abiotischem Stress nicht beschränkend

- mindestens ein um im Allgemeinen 5 %, insbesondere 10 %, besonders bevorzugt 15 %, speziell 20 %, verbessertes Auflaufen,
- mindestens einen um im Allgemeinen 5 %, insbesondere 10 %, besonders bevorzugt 15 %, speziell 20 %, gesteigerten Ertrag,
- mindestens eine um im Allgemeinen 5 %, insbesondere 10 %, besonders bevorzugt 15 %, speziell 20 %, verbesserte Wurzelentwicklung,
- mindestens eine um im Allgemeinen 5 %, insbesondere 10 %, besonders bevorzugt 15 %, speziell 20 %, ansteigende Sproßgröße,
- mindestens eine um im Allgemeinen 5 %, insbesondere 10 %, besonders bevorzugt 15 %, speziell 20 %, vergrößerte Blattfläche,
- mindestens ein um im Allgemeinen 5 %, insbesondere 10 %, besonders bevorzugt 15 %, speziell 20 %, verbesserten Auflauf, und/oder
- mindestens eine um im Allgemeinen 5 %, insbesondere 10 %, besonders bevorzugt 15 %, speziell 20 %, verbesserte Photosyntheseleistung verstanden, wobei die Effekte einzeln oder aber in beliebiger Kombination von zwei oder mehreren Efekten auftreten können.

In einer Ausführungsform kann beispielsweise vorgesehen sein, dass die erfindungsgemäß vorgesehenen Azole durch eine Sprühapplikation auf entsprechende zu behandelnde Pflanzen oder Pflanzenteile aufgebracht werden.

In der vorliegenden Erfindung findet die erfindungsgemäße Anwendung der Azole Prothioconazol, Tebuconazol und Metconazol in Gegenwart einer wirksamen Menge an Abscisinsäure statt. In diesem Fall kann gegebenenfalls ein synergistischer Effekt bei einer gleichzeitigen Anwendung von Azolen und der Abscisinsäure festgestellt werden.

Wenn im Rahmen der vorliegenden Erfindung Abscisinsäure gleichzeitig mit den Azolen, beispielsweise in Rahmen einer gemeinsamen Zubereitung oder Formulierung verwendet wird, so erfolgt die Zumischung von Abscisinsäure dabei vorzugsweise in einer Dosierung zwischen 0,01 und 3 kg/ha, besonders bevorzugt zwischen 0,05 und 2 kg/ha, insbesondere bevorzugt zwischen 0,1 und 1 kg/ha. Weiterer Gegenstand der vorliegenden Erfindung ist eine Sprühlösung zur Behandlung von Pflanzen, enthaltend eine zur Steigerung der Widerstandsfähigkeit von Pflanzen gegenüber abiotischen Stressfaktoren wirksame Menge von mindestens einer Verbindung, ausgewählt aus der Gruppe, bestehend aus Tebuconazol, Metconazol und Prothioconazol, sowie von beliebigen Mischungen dieser Azolverbindungen. Neben den erfindungsgemäß vorgesehenen Azolen umfasst die erfindungsgemäße Sprühlösung auch Abscisinsäure.

Die Sprühlösung kann andere übliche Bestandteile aufweisen, wie Lösungsmittel, insbesondere Wasser, enthalten. Weiterer Bestandteil können unter anderem agrochemische Wirkstoffe sein, welche unten noch weiter beschrieben werden. Der Gehalt an der mindestens einen Azolverbindung in der Sprühlösung beträgt vorzugsweise 0,0005 bis 15 Gew.-%, bezogen auf das Gesamtgewicht der Sprühlösung.

Die in der erfindungsgemäßen Sprühlösung umfasste Abscisinsäure kann in einer Menge von 0,0005 bis 15 Gew.-%, bezogen auf das Gesamtgewicht der Sprühlösung, zugegen sein.

Weiterer Gegenstand der vorliegenden Erfindung ist die Verwendung von entsprechenden Sprühlösungen zur Steigerung der Widerstandsfähigkeit von Pflanzen gegenüber abiotischen Stressfaktoren.

Düngemittel, die erfindungsgemäß zusammen mit den oben näher erläuterten Azolverbindungen verwendet werden können, sind im Allgemeinen organische und anorganische Stickstoff-haltige Verbindungen wie beispielsweise Harnstoffe, Harnstoff-Formaldehyd-Kondensationsprodukte, Aminosäuren, Ammoniumsalze und -nitrate, Kaliumsalze (bevorzugt Chloride, Sulfate, Nitrate), Phosphorsäuresalze und/oder Salze von Phosphoriger Säure (bevorzugt Kaliumsalze und Ammoniumsalze). Insbesondere zu nennen sind in diesem Zusammenhang die NPK-Dünger, d.h. Düngemittel, die Stickstoff, Phosphor und Kalium enthalten, Kalkammonsalpeter, d.h. Düngemittel, die noch Calcium enthalten, Am-

monsulfatsalpeter (Allgemeine Formel $(NH_4)_2SO_4 \cdot NH_4NO_3$), Ammonphosphat und Ammonsulfat. Diese Düngemittel sind dem Fachmann allgemein bekannt, siehe auch beispielsweise Ullmann's Encyclopedia of Industrial Chemistry, 5. Edition, Vol. A 10, Seiten 323 bis 431, Verlagsgesellschaft, Weinheim, 1987.

Die Düngemittel können auch Salze aus Mikronährstoffen (bevorzugt Calcium, Schwefel, Bor, Mangan, Magnesium, Eisen, Bor, Kupfer, Zink, Molybdän und Kobalt) und Phytohormonen (z. B. Vitamin B1 und Indol-(III)essigsäure) oder Gemische davon enthalten. Erfindungsgemäß eingesetzte Düngemittel können auch weitere Salze wie Monoammoniumphosphat (MAP), Diammoniumphosphat (DAP), Kaliumsulfat, Kaliumchlorid, Magnesiumsulfat enthalten. Geeignete Mengen für die sekundären Nährstoffe oder Spurenelemente sind Mengen von 0,5 bis 5 Gew.-%, bezogen auf das gesamte Düngemittel. Weitere mögliche Inhaltsstoffe sind Pflanzenschutzmittel, Insektizide oder Fungizide, Wachstumsregulatoren oder Gemische davon. Hierzu folgen weiter unten weitergehende Ausführungen.

Die Düngemittel können beispielsweise in Form von Pulvern, Granulaten, Prills oder Kompaktaten eingesetzt werden. Die Düngemittel können jedoch auch in flüssiger Form, gelöst in einem wässrigen Medium, eingesetzt werden. In diesem Fall kann auch verdünnter wässriger Ammoniak als Stickstoffdüngemittel eingesetzt werden. Weitere mögliche Inhaltsstoffe für Düngemittel sind beispielsweise in Ullmann's Encyclopedia of Industrial Chemistry, 5. Auflage, 1987, Band A 10, Seiten 363 bis 401, DE-A41 28 828, DE-A 19 05 834 und DE-A 196 31 764 beschrieben.

Die allgemeine Zusammensetzung der Düngemittel, bei welchen es sich im Rahmen der vorliegenden Erfindung um Einzelnährstoff- und/oder Mehrnährstoffdünger handeln kann, beispielsweise aus Stickstoff, Kalium oder Phosphor, kann innerhalb eines breiten Bereichs variieren. Im Allgemeinen ist ein Gehalt von 1 bis 30 Gew.-% Stickstoff (bevorzugt 5 bis 20 Gew.-%), von 1 bis 20 Gew.-% Kalium (bevorzugt 3 bis 15 Gew.-%) und ein Gehalt von 1 bis 20 Gew.-% Phosphor (bevorzugt 3 bis 10 Gew.-%) vorteilhaft. Der Gehalt von Mikroelementen ist üblicherweise im ppm-Bereich, bevorzugt im Bereich von von 1 bis 1000 ppm.

Im Rahmen der vorliegenden Erfindung kann das Düngemittel sowie die Azolverbindung zeitgleich, d.h. synchron, verabreicht werden. Es ist jedoch auch möglich, zunächst das Düngemittel und dann die Azolverbindung oder zunächst die Azolverbindung und dann das Düngemittel anzuwenden. Bei nicht zeitgleicher Anwendung der Azolverbindung und des Düngemittels erfolgt im Rahmen der vorliegenden Erfindung jedoch die Anwendung in funktionellem Zusammenhang, insbesondere innerhalb eines Zeitraums von im Allgemeinen 24 Stunden, bevorzugt 18 Stunden, besonders bevorzugt 12 Stunden, speziell 6 Stunden, noch spezieller 4 Stunden, noch weiter spezieller innerhalb 2 Stunden. In ganz besonderen

Ausführungsformen der vorliegenden Erfindung erfolgt die Anwendung der erfindungsgemäß vorgesehenen Wirkstoffe und des Düngemittels in einem zeitlichen Rahmen von weniger als 1 Stunden, vorzugsweise weniger als 30 Minuten, besonders bevorzugt weniger als 15 Minuten.

Die erfindungsgemäß zu verwendenden Wirkstoffe können, gegebenenfalls in Kombination mit Düngemitteln, bevorzugt an folgenden Pflanzen angewendet werden, wobei die folgende Aufzählung nicht beschränkend ist.

Bevorzugt sind Pflanzen aus der Gruppe der Nutzpflanzen, Zierpflanzen, Rasenarten, allgemein genutzte Bäume, die in öffentlichen und privaten Bereichen als Zierpflanzen Verwendungen finden, und Forstbestand. Der Forstbestand umfasst Bäume für die Herstellung von Holz, Zellstoff, Papier und Produkten die aus Teilen der Bäume hergestellt werden.

Der Begriff Nutzpflanzen, wie hier verwendet, bezeichnet Kulturpflanzen, die als Pflanzen für die Gewinnung von Nahrungsmitteln, Futtermitteln, Treibstoffe oder für technische Zwecke eingesetzt werden.

Zu den Nutzpflanzen zählen z. B. folgende Pflanzenarten: Triticale, Durum (Hartweizen), Turf, Reben, Getreide, beispielsweise Weizen, Gerste, Roggen, Hafer, Hopen, Reis, Mais und Hirse; Rüben, beispielsweise Zuckerrüben und Futterrüben; Früchte, beispielsweise Kernobst, Steinobst und Beerenobst, beispielsweise Äpfel, Birnen, Pflaumen, Pfirsiche, Mandeln, Kirschen und Beeren, z. B. Erdbeeren, Himbeeren, Brombeeren; Hülsenfrüchte, beispielsweise Bohnen, Linsen, Erbsen und Sojabohnen; Ölkulturen, beispielsweise Raps, Senf, Mohn, Oliven, Sonnenblumen, Kokos, Castorölpflanzen, Kakaobohnen und Erdnüsse; Gurkengewächse, beispielsweise Kürbis, Gurken und Melonen; Fasergewächse, beispielsweise Baumwolle, Flachs, Hanf und Jute; Citrusfrüchte, beispielsweise Orangen, Zitronen, Pampelmusen und Mandarinen; Gemüsesorten, beispielsweise Spinat, (Kopf)-Salat, Spargel, Kohlarten, Möhren, Zwiebeln, Tomaten, Kartoffeln und Paprika; Lorbeergewächse, beispielsweise Avocado, Cinnamonum, Kampfer, oder ebenso Pflanzen wie Tabak, Nüsse, Kaffee, Aubergine, Zuckerrohr, Tee, Pfeffer, Weinreben, Hopfen, Bananen, Naturkautschukgewächse sowie Zierpflanzen, beispielsweise Blumen, Sträucher, Laubbäume und Nadelbäume wie Koniferen. Diese Aufzählung stellt keine Limitierung dar.

Als besonders geeignete Zielkulturen für die Anwendung des erfindungsgemäßen Verfahrens sind folgende Pflanzen anzusehen: Hafer, Roggen, Triticale, Durum, Bamwolle, Aubergine, Turf, Kernobst, Steinobst, Beerenobst, Mais, Weizen, Gerste, Gurke, Tabak, Reben, Reis, Getreide, Birne, Pfeffer, Bohnen, Sojabohnen, Raps, Tomate, Paprika, Melonen, Kohl, Kartoffel und Apfel.

Als Bäume, die entsprechend dem erfindungsgemäßen Verfahren verbessert werden können, seien beispielhaft genannt: Abies sp., Eucalyptus sp., Picea sp., Pinus sp., Aesculus sp., Platanus sp., Tilia sp., Acer sp., Tsuga sp., Fraxinus sp., Sorbus sp., Betula sp., Crataegus sp., Ulmus sp., Quercus sp., Fagus sp., Salix sp., Populus sp..

Als bevorzugte Bäume, die entsprechend dem erfindungsgemäßen Verfahren verbessert werden können, können genannt werden: Aus der Baumart Aesculus: A. hippocastanum, A. pariflora, A. carnea; aus der Baumart Platanus: P. aceriflora, P. occidentalis, P. racemosa; aus der Baumart Picea: P. abies; aus der Baumart Pinus: P. radiate, P. ponderosa, P. contorta, P. sylvestre, P. elliottii, P. montecola, P. albicaulis, P. resinosa, P. palustris, P. taeda, P. flexilis, P. jeffregi, P. baksiana, P. strobes; aus der Baumart Eucalyptus: E. grandis, E. globulus, E. camadentis, E. nitens, E. obliqua, E. regnans, E. pilularus.

Als besonders bevorzugte Bäume, die entsprechend dem erfindungsgemäßen Verfahren verbessert werden können, können genannt werden: Aus der Baumart Pinus: P. radiate, P. ponderosa, P. contorta, P. sylvestre, P. strobes; aus der Baumart Eucalyptus: E. grandis, E. globulus und E. camadentis.

Als besonders bevorzugte Bäume, die entsprechend dem erfindungsgemäßen Verfahren verbessert werden können, können genannt werden: Rosskastanie, Platanengewächs, Linde und Ahornbaum.

Die vorliegende Erfindung kann auch an beliebigen Rasenarten ("turfgrasses") durchgeführt werden, einschließlich "cool season turfgrasses" und "warm season turfgrasses". Beispiele für Rasenarten für die kalte Jahreszeit sind Blaugräser ("blue grasses"; Poa spp.), wie "Kentucky bluegrass" (Poa pratensis L.), "rough bluegrass" (Poa trivialis L.), "Canada bluegrass" (Poa compressa L.), "annual bluegrass" (Poa annua L.), "upland bluegrass" (Poa glaucantha Gaudin), "wood bluegrass" (Poa nemoralis L.) und "bulbous bluegrass" (Poa bulbosa L.); Straussgräser ("Bentgrass", Agrostis spp.), wie "creeping bentgrass" (Agrostis palustris Huds.), "colonial bentgrass" (Agrostis tenuis Sibth.), "velvet bentgrass" (Agrostis canina L.), "South German Mixed Bentgrass" (Agrostis spp. einschließlich Agrostis tenius Sibth., Agrostis canina L., und Agrostis palustris Huds.), und "redtop" (Agrostis alba L.);

Schwingel ("Fescues", Festucu spp.), wie "red fescue" (Festuca rubra L. spp. rubra), "creeping fescue" (Festuca rubra L.), "chewings fescue" (Festuca rubra commutata Gaud.), "sheep fescue" (Festuca ovina L.), "hard fescue" (Festuca longifolia Thuill.), "hair fescue" (Festucu capillata Lam.), "tall fescue" (Festuca arundinacea Schreb.) und "meadow fescue" (Festuca elanor L.);

Lolch ("ryegrasses", Lolium spp.), wie "annual ryegrass" (Lolium multiflorum Lam.), "perennial ryegrass" (Lolium perenne L.) und "italian ryegrass" (Lolium multiflorum Lam.);

und Weizengräser ("wheatgrasses", Agropyron spp..), wie "fairway wheatgrass" (Agropyron cristatum (L.) Gaertn.), "crested wheatgrass" (Agropyron desertorum (Fisch.) Schult.) und "western wheatgrass" (Agropyron smithii Rydb.).

Beispiele für weitere "cool season turfgrasses" sind "beachgrass" (Ammophila breviligulata Fern.), "smooth bromegrass" (Bromus inermis Leyss.), Schilf ("cattails") wie "Timothy" (Phleum pratense L.), "sand cattail" (Phleum subulatum L.), "orchardgrass" (Dactylis glomerata L.), "weeping alkaligrass" (Puccinellia distans (L.) Parl.) und "crested dog's-tail" (Cynosurus cristatus L.).

Beispiele für "warm season turfgrasses" sind "Bermudagrass" (Cynodon spp. L. C. Rich), "zoysiagrass" (Zoysia spp. Willd.), "St. Augustine grass" (Stenotaphrum secundatum Walt Kuntze), "centipedegrass" (Eremochloa ophiuroides Munro Hack.), "carpetgrass" (Axonopus affinis Chase), "Bahia grass" (Paspalum notatum Flugge), "Kikuyugrass" (Pennisetum clandestinum Hochst. ex Chiov.), "buffalo grass" (Buchloe dactyloids (Nutt.) Engelm.), "Blue gramma" (Bouteloua gracilis (H.B.K.) Lag. ex Griffiths), "seashore paspalum" (Paspalum vaginatum Swartz) und "sideoats grama" (Bouteloua curtipendula (Michx. Torr.). "Cool season turfgrasses" sind für die erfindungsgemäße Verwendung im Allgemeinen bevorzugt. Besonders bevorzugt sind Blaugras, Straussgras und "redtop", Schwingel und Lolch. Straussgras ist insbesondere bevorzugt.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder mit Hilfe rekombinanter DNA-Techniken, gezüchtet worden sind. Kulturpflanzen können demnach Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten.

Das erfindungsgemäße Behandlungsverfahren kann somit auch für die Behandlung von genetisch modifizierten Organismen (GMOs), z. B. Pflanzen oder Samen, verwendet werden. Genetisch modifizierte Pflanzen (oder transgene Pflanzen) sind Pflanzen, bei denen ein heterologes Gen stabil in das Genom integriert worden ist. Der Begriff "heterologes Gen" bedeutet im wesentlichen ein Gen, das außerhalb der Pflanze bereitgestellt oder assembliert wird und das bei Einführung in das Zellkerngenom, das Chloroplastengenom oder das Hypochondriengenom der transformierten Pflanze dadurch neue oder verbesserte agronomische oder sonstige Eigenschaften verleiht, dass es ein interessierendes Protein oder Polypeptid exprimiert oder dasses ein anderes Gen, das in der Pflanze vorliegt bzw. andere Gene, die in der Pflanze vorliegen, herunterreguliert oder abschaltet (zum Beispiel mittels Antisense-Technologie, Co-suppressionstechnologie oder RNAi-Technologie [RNA Interference]). Ein heterologes Gen, das im Genom vorliegt, wird ebenfalls als Transgen bezeichnet. Ein Transgen, das durch sein spezifisches Vorliegen im Pflanzengenom definiert ist, wird als Transformations- bzw. transgenes Event bezeichnet.

Zu Pflanzen und Pflanzensorten, die vorzugsweise erfindungsgemäß behandelt werden, zählen alle Pflanzen, die über Erbgut verfügen, das diesen Pflanzen besonders vorteilhafte, nützliche Merkmale verleiht (egal, ob dies durch Züchtung und/oder Biotechnologie erzielt wurde).

Pflanzen und Pflanzensorten, die ebenfalls erfindungsgemäß behandelt werden können, sind solche Pflanzen, die gegen einen oder mehrere abiotische Streßfaktoren resistent sind. Zu den abiotischen Streßbedingungen können zum Beispiel Dürre, Kälte- und Hitzebedingungen, osmotischer Streß, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls erfindungsgemäß behandelt werden können, sind solche Pflanzen, die durch erhöhte Ertragseigenschaften gekennzeichnet sind. Ein erhöhter Ertrag kann bei diesen Pflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Streß- und nicht-Streß-Bedingungen) beeinflußt werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Pflanzen, die erfindungsgemäß ebenfalls behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Streßfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen (d. h. mechanischem Entfernen der männlichen Geschlechtsorgane bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, da man von den Hybridpflanzen ernten will, um die Samen handelt, ist es üblicherweise günstig, sicherzustellen, dass die Pollenfertilität in Hybridpflanzen, die die für die Pollensterilität verantwortlichen genetischen Determinanten enthalten, völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 1992/005251, WO 1995/009910, WO 1998/27806, WO 2005/002324, WO 2006/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 1991/002069).

Pflanzen oder Pflanzensorten (die mit Methoden der Pflanzenbiotechnologie, wie der Gentechnik, erhalten werden), die erfindungsgemäß ebenfalls behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidtolerante Pflanzen sind zum Beispiel glyphosatetolerante Pflanzen, d. h. Pflanzen, die gegenüber dem Herbizid Glyphosate oder dessen Salzen tolerant gemacht worden sind. So können zum Beispiel glyphosatetolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium Salmonella typhimurium (Comai et al., Science (1983), 221, 370-371), das CP4-Gen des Bakteriums Agrobacterium sp. (Barry et al., Curr. Topics Plant Physiol. (1992), 7, 139-145), die Gene, die für eine EPSPS aus der Petunie (Shah et al., Science (1986), 233, 478-481), für eine EPSPS aus der Tomate (Gasser et al., J. Biol. Chem. (1988), 263, 4280-4289) oder für eine EPSPS aus Eleusine (WO 2001/66704) kodieren. Es kann sich auch um eine mutierte EPSPS handeln, wie sie zum Beispiel in EP-A 0837944, WO 2000/066746, WO 2000/066747 oder WO 2002/026995 beschrieben ist. Glyphosatetolerante Pflanzen können auch dadurch erhalten werden, dass man ein Gen exprimiert, das für ein Glyphosate-Oxidoreduktase-Enzym, wie es in US 5,776,760 und US 5,463,175 beschrieben ist, kodiert. Glyphosatetolerante Pflanzen können auch dadurch erhalten werden, dass man ein Gen exprimiert, das für ein Glyphosate-acetyltransferase-Enzym, wie es in z. B. WO 2002/036782, WO 2003/092360, WO 2005/012515 und WO 2007/024782 beschrieben ist, kodiert. Glyphosatetolerante Pflanzen können auch dadurch erhalten werden, dass man Pflanzen, die natürlich vorkommende Mutationen der oben erwähnten Gene, wie sie zum Beispiel in WO 2001/024615 oder WO 2003/013226 beschrieben sind, enthalten, selektiert.

Sonstige herbizidresistente Pflanzen sind zum Beispiel Pflanzen, die gegenüber Herbiziden, die das Enzym Glutaminsynthase hemmen, wie Bialaphos, Phosphinotricin oder Glufosinate, tolerant gemacht worden sind. Solche Pflanzen können dadurch erhalten werden, dass man ein Enzym exprimiert, das das Herbizid oder eine Mutante des Enzyms Glutaminsynthase, das gegenüber Hemmung resistent ist, entgiftet. Solch ein wirksames entgiftendes Enzym ist zum Beispiel ein Enzym, das für ein Phosphinotricin-acetyltransferase kodiert (wie zum Beispiel das bar- oder pat-Protein aus Streptomyces-Arten). Pflanzen, die eine exogene Phosphinotricin-acetyltransferase exprimieren, sind zum Beispiel in US 5,561,236; US 5,648,477; US 5,646,024; US 5,273,894; US 5,637,489; US 5,276,268; US 5,739,082; US 5,908,810 und US 7,112,665 beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei den Hydroxyphenylpyruvatdioxygenasen handelt es sich um Enzyme, die die Reaktion, in der para-Hydroxyphenylpyruvat (HPP) zu Homogentisat umgesetzt wird, katalysieren. Pflanzen, die gegenüber HPPD-Hemmern tolerant sind, können mit einem Gen, das für ein natürlich vorkommendes resistentes HPPD-Enzym kodiert, oder einem Gen, das für ein mutiertes HPPD-Enzym gemäß WO 1996/038567, WO 1999/024585 und WO 1999/024586 kodiert, transformiert werden. Eine Toleranz gegenüber HPPD-Hemmern kann auch dadurch erzielt werden, dass man Pflanzen mit Genen transformiert, die für gewisse Enzyme kodieren, die die Bildung von Homogentisat trotz Hemmung des nativen HPPD-Enzyms durch den HPPD-Hemmer ermöglichen. Solche Pflanzen und Gene sind in WO 1999/034008 und WO 2002/36787 beschrieben. Die Toleranz von Pflanzen gegenüber HPPD-Hemmern kann auch dadurch verbessert werden, dass man Pflanzen zusätzlich zu einem Gen, das für ein HPPD-tolerantes Enzym kodiert, mit einem Gen transformiert, das für ein Prephenatdehydrogenase-Enzym kodiert, wie dies in WO 2004/024928 beschrieben ist.

Weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylharnstoff, Imidazolinon, Triazolopyrimidine, Pyrimidinyloxy(thio)benzoate und/oder Sulfonylaminocarbonyltriazolinon-Herbizide. Es ist bekannt, dass verschiedene Mutationen im Enzym ALS (auch als Acetohydroxysäure-Synthase, AHAS, bekannt) eine Toleranz gegenüber unterschiedlichen Herbiziden bzw. Gruppen von Herbiziden verleihen, wie dies zum Beispiel bei Tranel und Wright, Weed Science (2002), 50, 700-712, jedoch auch in US 5,605,011, US 5,378,824, US 5,141,870 und US 5,013,659, beschrieben ist. Die Herstellung von sulfonylharnstofftoleranten Pflanzen und imidazolinontoleranten Pflanzen ist in US 5,605,011; US 5,013,659; US 5,141,870; US 5,767,361; US 5,731,180; US 5,304,732; US 4,761,373; US 5,331,107; US 5,928,937; und US 5,378,824; sowie in der internationalen Veröffentlichung WO 1996/033270 beschrieben. Weitere imidazolinontolerante Pflanzen sind auch in z. B. WO 2004/040012, WO 2004/106529, WO 2005/020673, WO 2005/093093, WO 2006/007373, WO 2006/015376, WO 2006/024351 und WO 2006/060634 beschrieben. Weitere sulfonylharnstoff- und imidazolinontolerante Pflanzen sind auch in z.B. WO 2007/024782 beschrieben.

Weitere Pflanzen, die gegenüber Imidazolinon und/oder Sulfonylharnstoff tolerant sind, können durch induzierte Mutagenese, Selektion in Zellkulturen in Gegenwart des Herbizids oder durch Mutationszüchtung erhalten werden, wie dies zum Beispiel für die Sojabohne in US 5,084,082, für Reis in WO 1997/41218, für die Zuckerrübe in US 5,773,702 und WO 1999/057965, für Salat in US 5,198,599 oder für die Sonnenblume in WO 2001/065922 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz verleiht, erhalten werden.

Der Begriff "insektenresistente transgene Pflanze" umfaßt im vorliegenden Zusammenhang jegliche Pflanze, die mindestens ein Transgen enthält, das eine Kodiersequenz umfaßt, die für folgendes kodiert:

1) ein insektizides Kristallprotein aus Bacillus thuringiensis oder einen insektiziden Teil davon, wie die insektiziden Kristallproteine, die von Crickmore et al., Microbiology and Molecular Biology Reviews (1998), 62, 807-813, von Crickmore et al. (2005) in der Bacillus thuringiensis-Toxinnomenklatur aktualisiert, online bei:

http://www.lifesci.sussex.ac.uk/Home/Neil_Crickmore/Bt/), zusammengestellt wurden, oder insektizide Teile davon, z.B. Proteine der Cry-Proteinklassen Cry1Ab, Cry1Ac, Cry1 F, Cry2Ab, Cry3Ae oder Cry3Bb oder insektizide Teile davon; oder

2) ein Kristallprotein aus Bacillus thuringiensis oder einen Teil davon, der in Gegenwart eines zweiten, anderen Kristallproteins als Bacillus thuringiensis oder eines Teils davon insektizid wirkt, wie das binäre Toxin, das aus den Kristallproteinen Cy34 und Cy35 besteht (Moellenbeck et al., Nat. Biotechnol. (2001), 19, 668-72; Schnepf et al., Applied Environm. Microb. (2006), 71, 1765-1774); oder

3) ein insektizides Hybridprotein, das Teile von zwei unterschiedlichen insektiziden Kristallproteinen aus Bacillus thuringiensis umfaßt, wie zum Beispiel ein Hybrid aus den Proteinen von 1) oben oder ein Hybrid aus den Proteinen von 2) oben, z. B. das Protein Cry1A.105, das von dem Mais-Event MON98034 produziert wird (WO 2007/027777); oder

4) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier- DNA während der Klonierung oder Transformation induziert wurden, wie das Protein Cry3Bb1 in Mais-Events MON863 oder MON88017 oder das Protein Cry3A im Mais-Event MIR 604; oder

5) ein insektizides sezerniertes Protein aus Bacillus thuringiensis oder Bacillus cereus oder einen insektiziden Teil davon, wie die vegetativ wirkenden insektentoxischen Proteine (vegetative insecticidal proteins, VIP), die unter http://www.lifesci.sussex.ac.uk/Home/Neil_Crickmore/Bt/vip.html angeführt sind, z. B. Proteine der Proteinklasse VIP3Aa; oder

6) ein sezerniertes Protein aus Bacillus thuringiensis oder Bacillus cereus, das in Gegenwart eines zweiten sezernierten Proteins aus Bacillus thuringiensis oder B. cereus insektizid wirkt, wie das binäre Toxin, das aus den Proteinen VIP1A und VIP2A besteht (WO 1994/21795); oder

7) ein insektizides Hybridprotein, das Teile von verschiedenen sezernierten Proteinen von Bacillus thuringiensis oder Bacillus cereus umfaßt, wie ein Hybrid der Proteine von 1) oder ein Hybrid der Proteine von 2) oben; oder

8) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier- DNA während der Klonierung oder Transformation induziert wurden (wobei die Kodierung für ein insektizides Protein erhalten bleibt), wie das Protein VIP3Aa im Baumwoll-Event COT 102.

Natürlich zählt zu den insektenresistenten transgenen Pflanzen im vorliegenden Zusammenhang auch jegliche Pflanze, die eine Kombination von Genen umfaßt, die für die Proteine von einer der oben genannten Klassen 1 bis 8 kodieren. In einer Ausführungsform enthält eine insektenresistente Pflanze mehr als ein Transgen, das für ein Protein nach einer der oben genannten 1 bis 8 kodiert, um das Spektrum der entsprechenden Zielinsektenarten zu erweitern oder um die Entwicklung einer Resistenz der Insekten gegen die Pflanzen dadurch hinauszuzögern, dass man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Pflanzen oder Pflanzensorten (die nach Methoden der pflanzlichen Biotechnologie, wie der Gentechnik, erhalten wurden), die ebenfalls erfindungsgemäß behandelt werden können, sind gegenüber abiotischen Streßfaktoren tolerant. Solche Pflanzen können durch genetische Transformation oder durch Selektion von Pflanzen, die eine Mutation enthalten, die solch eine Streßresistenz verleiht, erhalten werden. Zu besonders nützlichen Pflanzen mit Streßtoleranz zählen folgende:

a. Pflanzen, die ein Transgen enthalten, das die Expression und/oder Aktivität des Gens für die Poly(ADP-ribose)polymerase (PARP) in den Pflanzenzellen oder Pflanzen zu reduzieren vermag, wie dies in WO 2000/004173 oder EP 04077984.5 oder EP 06009836.5 beschrieben ist.

b. Pflanzen, die ein streßtoleranzförderndes Transgen enthalten, das die Expression und/oder Aktivität der für PARG kodierenden Gene der Pflanzen oder Pflanzenzellen zu reduzieren vermag, wie dies z.B. in WO 2004/090140 beschrieben ist;

c. Pflanzen, die ein streßtoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotidadenyltransferase, Nicotinamidadenindinukleotidsynthetase oder Nicotinamidphosphoribosyltransferase, wie dies z. B. in EP 04077624.7 oder WO 2006/133827 oder PCT/EP07/002433 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, weisen eine veränderte Menge, Qualität und/oder Lagerfähigkeit des Ernteprodukts und/oder veränderte Eigenschaften von bestimmten Bestandteilen des Ernteprodukts auf, wie zum Beispiel:

1) Transgene Pflanzen, die eine modifizierte Stärke synthetisieren, die bezüglich ihrer chemisch-physikalischen Eigenschaften, insbesondere des Amylosegehalts oder des Amylose/Amylopektin-Verhältnisses, des Verzweigungsgrads, der durchschnittlichen Kettenlänge, der Verteilung der Seitenketten, des Viskositätsverhaltens, der Gelfestigkeit, der Stärkekorngröße und/oder Stärkekornmorphologie im Vergleich mit der synthetisierten Stärke in Wildtyppflanzenzellen oder -pflanzen verändert ist, so dass sich diese modifizierte Stärke besser für bestimmte Anwendungen eignet. Diese transgenen Pflanzen, die eine modifizierte Stärke synthetisieren, sind zum Beispiel in EP 0571427, WO 1995/004826, EP 0719338, WO 1996/15248, WO 1996/19581, WO 1996/27674, WO 1997/11188, WO 1997/26362, WO 1997/32985, WO 1997/42328, WO 1997/44472, WO 1997/45545, WO 1998/27212, WO 1998/40503, WO 99/58688, WO 1999/58690, WO 1999/58654, WO 2000/008184, WO 2000/008185, WO 2000/28052, WO 2000/77229, WO 2001/12782, WO 2001/12826, WO 2002/101059, WO 2003/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 2000/22140, WO 2006/063862, WO 2006/072603, WO 2002/034923, EP 06090134.5, EP 06090228.5, EP 06090227.7, EP 07090007.1, EP 07090009.7, WO 2001/14569, WO 2002/79410, WO 2003/33540, WO 2004/078983, WO 2001/19975, WO 1995/26407, WO 1996/34968, WO 1998/20145, WO 1999/12950, WO 1999/66050, WO 1999/53072, US 6,734,341, WO 2000/11192, WO 1998/22604, WO 1998/32326, WO 2001/98509, WO 2001/98509, WO 2005/002359, US 5,824,790, US 6,013,861, WO 1994/004693, WO 1994/009144, WO 1994/11520, WO 1995/35026 bzw. WO 1997/20936 beschrieben.

2) Transgene Pflanzen, die Nichtstärkekohlenhydratpolymere synthetisieren, oder Nichtstärkekohlenhydratpolymere, deren Eigenschaften im Vergleich zu Wildtyppflanzen ohne genetische Modifikation verändert sind. Beispiele sind Pflanzen, die Polyfructose, insbesondere des Inulin- und Levantyps, produzieren, wie dies in EP 0663956, WO 1996/001904, Wo 1996/021023, WO 1998/039460 und WO 1999/024593 beschrieben ist, Pflanzen, die alpha-1,4-Glucane produzieren, wie dies in WO 1995/031553, US 2002/031826, US 6,284,479, US 5,712,107, WO 1997/047806, WO 1997/047807, WO 1997/047808 und WO 2000/14249 beschrieben ist, Pflanzen, die alpha-1,6-verzweigte alpha-1,4-Glucane produzieren, wie dies in WO 2000/73422 beschrieben ist, und Pflanzen, die Alternan produzieren, wie dies in WO 2000/047727, EP 06077301.7, US 5,908,975 und EP 0728213 beschrieben ist.

3) Transgene Pflanzen, die Hyaluronan produzieren, wie dies zum Beispiel in WO 2006/032538, WO 2007/039314, WO 2007/039315, WO 2007/039316, JP 2006/304779 und WO 2005/012529 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Baumwollpflanzen mit veränderten Fasereigenschaften. Solche Pflanzen können durch genetische Transformation oder durch Selektion von Pflanzen, die eine Mutation enthalten, die solche veränderten Fasereigenschaften verleiht, erhalten werden; dazu zählen:

a) Pflanzen wie Baumwollpflanzen, die eine veränderte Form von Cellulosesynthasegenen enthalten, wie dies in WO 1998/000549 beschrieben ist,

b) Pflanzen wie Baumwollpflanzen, die eine veränderte Form von rsw2- oder rsw3-homologen Nukleinsäuren enthalten, wie dies in WO 2004/053219 beschrieben ist;

c) Pflanzen wie Baumwollpflanzen mit einer erhöhten Expression der Saccharosephosphatsynthase, wie dies in WO 2001/017333 beschrieben ist;

d) Pflanzen wie Baumwollpflanzen mit einer erhöhten Expression der Saccharosesynthase, wie dies in WO 02/45485 beschrieben ist;

e) Pflanzen wie Baumwollpflanzen bei denen der Zeitpunkt der Durchlaßsteuerung der Plasmodesmen an der Basis der Faserzelle verändert ist, z. B. durch Herunterregulieren der faserselektiven $\beta$-1,3-Glucanase, wie dies in WO 2005/017157 beschrieben ist;

f) Pflanzen wie Baumwollpflanzen mit Fasern mit veränderter Reaktivität, z. B. durch Expression des N-Acetylglucosamintransferasegens, darunter auch nodC, und von Chitinsynthasegenen, wie dies in WO 2006/136351 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Raps oder verwandte Brassica-Pflanzen mit veränderten Eigenschaften der Ölzusammensetzung. Solche Pflanzen können durch genetische Transformation oder durch Selektion von Pflanzen, die eine Mutation enthalten, die solche veränderten Öleigenschaften verleiht, erhalten werden; dazu zählen:

a) Pflanzen wie Rapspflanzen, die Öl mit einem hohen Ölsäuregehalt produzieren, wie dies zum Beispiel in US 5,969,169, US 5,840,946 oder US 6,323,392 oder US 6,063, 947 beschrieben ist;

b) Pflanzen wie Rapspflanzen, die Öl mit einem niedrigen Linolensäuregehalt produzieren, wie dies in US 6,270828, US 6,169,190 oder US 5,965,755 beschrieben ist.

c) Pflanzen wie Rapspflanzen, die Öl mit einem niedrigen gesättigten Fettsäuregehalt produzieren, wie dies z. B. in US 5,434,283 beschrieben ist.

Besonders nützliche transgene Pflanzen, die erfindungsgemäß behandelt werden können, sind Pflanzen mit einem oder mehreren Genen, die für ein oder mehrere Toxine kodieren, sind die transgenen Pflanzen, die unter den folgenden Handelsbezeichnungen angeboten werden: YIELD GARD® (zum Beispiel Mais, Baumwolle, Sojabohnen), KnockOut® (zum Beispiel Mais), BiteGard® (zum Beispiel Mais), BT-Xtra® (zum Beispiel Mais), StarLink® (zum Beispiel Mais), Bollgard® (Baumwolle), Nucotn® (Baumwolle), Nucotn 33B® (Baumwolle), NatureGard® (zum Beispiel Mais), Protecta® und NewLeaf® (Kartoffel). Herbizidtolerante Pflanzen, die zu erwähnen sind, sind zum Beispiel Maissorten, Baumwollsorten und Sojabohnensorten, die unter den folgenden Handelsbezeichnungen angeboten werden: Roundup Ready® (Glyphosatetoleranz, zum Beispiel Mais, Baumwolle, Sojabohne), Liberty Link® (Phosphinotricintoleranz, zum Beispiel Raps), IMI® (Imidazolinontoleranz) und SCS® (Sylfonylharnstofftoleranz), zum Beispiel Mais. Zu den herbizidresistenten Pflanzen (traditionell auf Herbizidtoleranz gezüchtete Pflanzen), die zu erwähnen sind, zählen die unter der Bezeichnung Clearfield® angebotenen Sorten (zum Beispiel Mais).

Besonders nützliche transgene Pflanzen, die erfindungsgemäß behandelt werden können, sind Pflanzen, die Transformations-Events, oder eine Kombination von Transformations-Events, enthalten und die zum Beispiel in den Dateien von verschiedenen nationalen oder regionalen Behörden angeführt sind (siehe zum Beispiel http://gmoinfo.jrc.it/gmp_browse.aspx und http://www.agbios.com/dbase.php).

Formulierungen:

Die erfindungsgemäß zu verwendenden Wirkstoffe können in üblichen Formulierungen überführt werden, wie Lösungen, Emulsionen, Spritzpulver, wasser-und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Im Rahmen der vorliegenden Erfindung ist es insbesondere bevorzugt, wenn die erfindungsgemäß vorgesehenen Azole in Kombination mit Abscisinsäure in der Form einer Sprühformulieruing verwendet werden.

Die vorliegende Erfindung betrifft daher darüber hinaus auch eine Sprühformulierung zur Steigerung der Widerstandsfähigkeit von Pflanzen gegenüber abiotischem Stress. Im Folgenden wird eine Sprühformulierung näher beschrieben:

Die Formulierungen zur Sprühapplikation werden in bekannter Weise hergestellt, z.B. durch Vermischen der erfindungsgemäß zu verwendenden Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Weitere übliche Zusatzstoffe, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser, können gegebenenfalls auch verwendet werden. Die Herstellung der Formulierungen erfolgt entweder in geeigneten Anlagen oder auch vor oder während der Anwendung.

Als Hilfsstoffe können solche Stoffe Verwendung finden, die geeignet sind, dem Mittel selbst oder und/oder davon abgeleitete Zubereitungen (z.B. Spritzbrühen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nichtaromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (Poly-)Ether, der einfachen und substituierten Amine, Amide, Lactame (wie N-Alkylpyrrolidone) und Lactone, der Sulfone und Sulfoxide (wie Dimethylsysulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Als Netzmittel, die in den erfindungsgemäß verwendbaren Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutylnaphthalin-Sulfonate. Als Dispergiermittel und/oder Emulgatoren, die in den erfindungsgemäß verwendbaren Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid-Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Weitere Additive können Duftstoffe, mineralische oder vegetabilische gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Oxidationsschutzmittel, Lichtschutzmittel oder andere die chemische und / oder physikalische Stabilität verbessernde Mittel.

Die Formulierungen enthalten im allgemeinen zwischen 0,01 und 98 Gew.-%, vorzugsweise zwischen 0,5 und 90 %, Azolwirkstoff.

Der erfindungsgemäße Wirkstoff kann in seinen handelsüblichen Formulierungen sowie in den aus diesen Formulierungen bereiteten Anwendungsformen in Mischung mit anderen Wirkstoffen wie Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals vorliegen.

Ferner lässt sich die beschriebene positive Wirkung der Azolverbindungen auf die pflanzeneigenen Abwehrkräfte durch eine zusätzliche Behandlung mit insektziden, fungiziden oder bakteriziden Wirkstoffen unterstützen.

Bevorzugte Zeitpunkte für die Applikation von Azolverbindungen zur Seigerung der Resistanz gegenüber abiotischem Stress sind Boden-, Stamm- und/oder Blattbehandlungen mit den zugelassenen Aufwandmengen.

Die erfindungsgemäßen Wirkstoffe können im Allgemeinen darüber hinaus in ihren handelsüblichen Formulierungen sowie in den aus diesen Formulierungen bereiteten Anwendungsformen in Mischungen mit anderen Wirkstoffen, wie Insektiziden, Lockstoffen, Sterilantien, Akariziden, Nematiziden, Fungiziden, wachstumsregulierenden Stoffen oder Herbiziden vorliegen.

Besonders günstige Mischpartner sind beispielsweise die folgenden:

Fungizide:

Inhibitoren der Nucleinsäure Synthese

Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadixyl, Oxolinsäure

Inhibitoren der Mitose und Zellteilung

Benomyl, Carbendazim, Diethofencarb, Fuberidazole, Pencycuron, Thiabendazol, Thiophanat-methyl, Zoxamid

Inhibitoren der Atmungskette Komplex I / II

Diflumetorim

Bixafen, Boscalid, Carboxin, Fenfuram, Fluopyram, Flutolanil, Furametpyr, Mepronil, Oxycarboxin, Penthiopyrad, Thifluzamid, N-[2-(1,3-dimethylbutyl)phenyl]-5-fluor-1,3-dimethyl-1 H-pyrazol-4-carboxamid

Inhibitoren der Atmungskette Komplex III

Amisulbrom, Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Pyribencarb, Picoxystrobin, Trifloxystrobin

Entkoppler

Dinocap, Fluazinam

Inhibitoren der ATP Produktion

Fentinacetat, Fentinchlorid, Fentinhydroxid, Silthiofam

Inhibitoren der Aminosäure- und Proteinbiosynthese

Andoprim, Blasticidin-S, Cyprodinil, Kasugamycin, Kasugamycinhydrochlorid Hydrat, Mepanipyrim, Pyrimethanil

Inhibitoren der Signal-Transduktion

Fenpiclonil, Fludioxonil, Quinoxyfen

Inhibitoren der Fett- und Membran Synthese

Chlozolinat, Iprodion, Procymidon, Vinclozolin

Ampropylfos, Kalium-Ampropylfos, Edifenphos, Iprobenfos (IBP), Isoprothiolan, Pyrazophos

Tolclofos-methyl, Biphenyl

Iodocarb, Propamocarb, Propamocarb hydrochlorid

Inhibitoren der Ergosterol Biosynthese

Fenhexamid,

Azaconazol, Bitertanol, Bromuconazol, Diclobutrazol, Difenoconazol, Diniconazol, Diniconazol-M, Etaconazol, Fenbuconazol, Fluquinconazol, Flusilazol, Flutriafol, Furconazol, Furconazol-cis, Hexaconazol, Imibenconazol, Ipconazol, Myclobutanil, Paclobutrazol, Penconazol, Propiconazol, Simeconazol, Spiroxamin, Tebuconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol,

Aldimorph, Dodemorph, Dodemorphacetat, Fenpropimorph, Tridemorph, Fenpropidin, Spiroxamin,

Naftifin, Pyributicarb, Terbinafin

Inhibitoren der Zellwand Synthese

Benthiavalicarb, Bialaphos, Dimethomorph, Flumorph, Iprovalicarb, Polyoxins, Polyoxorim, Validamycin A

Inhibitoren der Melanin Biosynthese

Capropamid, Diclocymet, Fenoxanil, Phtalid, Pyroquilon, Tricyclazol

Resistenzinduktion

Acibenzolar-S-methyl, Probenazol, Tiadinil

Multisite

Captafol, Captan, Chlorothalonil, Kupfersalze wie: Kupferhydroxid, Kupfernaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram

Unbekannter Mechanismus

Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Fosatyl-AI, Hexachlorobenzol, 8-Hydroxychinolinsulfat, Iprodione, Irumamycin, Isotianil, Methasulphocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorophenol und Salze, 2-Phenylphenol und Salze, Piperalin, Propanosin-Natrium, Proquinazid, Pyrrolnitrin, Quintozen, Tecloftalam, Tecnazen, Triazoxid, Trichlamid, Zarilamid und 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-triazol-1-yl)-cycloheptanol, 2,4-Dihydro-5-methoxy-2-methyl-4-[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1H-inden-1-yl)-1H-imidazole-5-carboxylat, 3,4,5-Trichlor-2,6-pyridindicarbonitril, Methyl 2-[[[cyclopropyl[(4-methoxyphenyl) imino]methyl]thio]methyl]-.alpha.-(methoxymethylen)- benzacetat, 4-Chlor-alpha-propinyloxy-N-[2-[3-methoxy-4-(2-propinyloxy)phenyl]ethyl]-benzacetamide, (2S)-N-[2-[4-[[3-(4-chlorophenyl)-2-propinyl]oxy]-3-methoxyphenyl]ethyl]-3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1R)-1,2,2-trimethylpropyl][1,2,4]triazolo[1,5-a]pyrimidin-7-amin, 5-Chlor-N-[(1R)-1,2-dimethylpropyl]-6-(2,4,6-trifluorophenyl)[1,2,4]triazolo[1,5-a]pyrimidin-7-amine, N-[1-(5-Brom-3-chloropyridin-2-yl)ethyl]-2,4-dichloronicotinamid, N-(5-Brom-3-chlorpyridin-2-yl)methyl-2,4-dichlornicotinamid, 2-Butoxy-6-iod-3-propyl-benzopyranon-4-on, N-{(Z)-[(cyclopropylmethoxy) imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1Fluor-2-phenylethyl)oxy] phenyl] ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)-3-(difluormethyl)-1-methyl-1H-pyrazol-4-carboxamid, N-(6-Methoxy-3-pyridinyl)-cyclopropan carboxamid, 1-[(4-Methoxyphenoxy)methyl]-2,2-dimethylpropyl-1 H-imidazol-1- carbonsäure, O-[1-[(4-Methoxyphenoxy)methyl]-2,2-dimethylpropyl]-1H-imidazol- 1- carbothioic acid, 2-(2-{[6-(3-Chlor-2-methylphenoxy)-5-fluorpyrimidin-4-yl]oxy}phenyl)-2-(methoxyimino)-N-methylacetamid

Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Insektizide / Akarizide / Nematizide:

Acetylcholinesterase (AChE) Inhibitoren

Carbamate,

zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Fenoxycarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate

Organophosphate,

zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion

Natrium-Kanal-Modulatoren / Spannungsabhängige Natrium-Kanal-Blocker

Pyrethroide,
zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Eflusilanate, Empenthrin (1 R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1 R-trans isomer), Prallethrin, Profluthrin, Protrifenbute, Pyresmethrin, Pyrethrin, Resmethrin, RU 15525, Silafluofen, Tau-Fluvalinate, Tefluthrin, Terallethrin, Tetramethrin (-1 R- isomer), Tralomethrin, Transfluthrin, ZXI 8901, Pyrethrins (pyrethrum)

DDT

Oxadiazine,
zum Beispiel Indoxacarb

Semicarbazon,
zum Beispiel Metaflumizon (BAS3201)

Acetylcholin-Rezeptor-Agonisten/-Antagonisten

Chloronicotinyle,
zum Beispiel Acetamiprid, AKD 1022, Clothianidin, Dinotefuran, Imidacloprid, Imidaclothiz, Nitenpyram, Nithiazine, Thiacloprid, Thiamethoxam

Nicotine, Bensultap, Cartap

Acetylcholin-Rezeptor-Modulatoren

Spinosyne,
zum Beispiel Spinosad

GABA-gesteuerte Chlorid-Kanal-Antagonisten

Organochlorine,
zum Beispiel Camphechlor, Chlordane, Endosulfan, Gamma-HCH, HCH, Heptachlor, Lindane, Methoxychlor

Fiprole,
zum Beispiel Acetoprole, Ethiprole, Fipronil, Pyrafluprole, Pyriprole, Vaniliprole

Chlorid-Kanal-Aktivatoren

Mectine,
zum Beispiel Abamectin, Emamectin, Emamectin-benzoate, Ivermectin, Lepimectin, Milbemycin

Juvenilhormon-Mimetika,
zum Beispiel Diofenolan, Epofenonane, Fenoxycarb, Hydroprene, Kinoprene, Methoprene, Pyriproxifen, Triprene

Ecdysonagonisten/disruptoren

Diacylhydrazine,
zum Beispiel Chromafenozide, Halofenozide, Methoxyfenozide, Tebufenozide

Inhibitoren der Chitinbiosynthese

Benzoylharnstoffe,
zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron

Buprofezin

Cyromazine

Inhibitoren der oxidativen Phosphorylierung, ATP-Disruptoren

Diafenthiuron

Organozinnverbindungen,
zum Beispiel Azocyclotin, Cyhexatin, Fenbutatin-oxide

Entkoppler der oxidativen Phoshorylierung durch Unterbrechung des H-Protongradienten

Pyrrole,
zum Beispiel Chlorfenapyr

Dinitrophenole,
zum Beispiel Binapacyrl, Dinobuton, Dinocap, DNOC, Meptyldinocap

Seite-I-Elektronentransportinhibitoren

METI's,
zum Beispiel Fenazaquin, Fenpyroximate, Pyrimidifen, Pyridaben, Tebufenpyrad, Tolfenpyrad

Hydramethylnon

Dicofol

Seite-II-Elektronentransportinhibitoren

Rotenone

Seite-III-Elektronentransportinhibitoren

Acequinocyl, Fluacrypyrim

Mikrobielle Disruptoren der Insektendarmmembran

Bacillus thuringiensis-Stämme

Inhibitoren der Fettsynthese

Tetronsäuren,
zum Beispiel Spirodiclofen, Spiromesifen,

Tetramsäuren,

zum Beispiel Spirotetramat, cis-3-(2,5-dimethylphenyl)-4-hydroxy-8-methoxy-1-azaspiro[4.5]dec-3-en-2-on

Carboxamide,

zum Beispiel Flonicamid

Oktopaminerge Agonisten,
zum Beispiel Amitraz

Inhibitoren der Magnesium-stimulierten ATPase,
Propargite

Nereistoxin-Analoge,
zum Beispiel Thiocyclam hydrogen oxalate, Thiosultap-sodium

Agonisten des Ryanodin-Rezeptors,

Benzoesäuredicarboxamide, zum Beispiel Flubendiamide

Anthranilamide,
zum Beispiel Rynaxypyr (3-Bromo-N-{4-chloro-2-methyl-6-[(methylamino)carbonyl]phenyl}-1-(3-chloropyridin-2-yl)-1H-pyrazole-5-carboxamide), Cyazypyr (ISO-proposed) (3-Bromo-N-{4-cyan-2-methyl-6-[(methylamino)carbonyl]phenyl}-1-(3-chlorpyridin-2-yl)-1H-pyrazol-5-carboxamid) (bekannt aus WO 2004067528)

Biologika, Hormone oder Pheromone

Azadirachtin, Bacillus spec., Beauveria spec., Codlemone, Metarrhizium spec., Paecilomyces spec., Thuringiensin, Verticillium spec.

Wirkstoffe mit unbekannten oder nicht spezifischen Wirkmechanismen

Begasungsmittel,
zum Beispiel Aluminium phosphide, Methyl bromide, Sulfuryl fluoride

Fraßhemmer, zum Beispiel Cryolite, Flonicamid, Pymetrozine

Milbenwachstumsinhibitoren,
zum Beispiel Clofentezine, Etoxazole, Hexythiazox

Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin
oder Lepimectin

Die folgenden Beispiele beschreiben die Erfindung im Einzelnen, bescränken jedoch keineswegs die vorliegende Erfindung.

Versuchsbeschreibung:

Samen von mono- bzw. dikotylen Kulturpflanzen werden in Holzfasertöpfen in sandigem Lehmboden ausgelegt,
mit Erde abgedeckt und im Gewächshaus unter guten Wachstumsbedingungen angezogen. Die Behandlung der Versuchspflanzen erfolgt im frühen Laubblattstadium (BBCH10 - BBCH13 BBCH-Monografie der Biologische Bundesanstalt
für Land und Forstwirtschaft, 2. Auflage, 2001), je nach Art also 2-3 Wochen nach der Aussaat. Zur Gewährleistung
einer uniformen Wasserversorgung vor Stressbeginn werden die bepflanzten Töpfe unmittelbar zuvor durch Anstaubewässerung maximal mit Wasser versorgt sowie in Plastikeinsätze transferiert, um anschließendes, zu schnelles Abtrocknen zu verhindern. Die in Form von benetzbaren Pulvern (WP) formulierten erfindungsgemäßen Verbindungen
werden dann als wässrige Suspension mit einer Wasseraufwandmenge von umgerechnet 600 l/ha unter Zusatz von
0,2% Netzmittel (Agrotin) auf die grünen Pflanzenteile gesprüht. Unmittelbar nach Substanzapplikation erfolgt die Stressbehandlung der Pflanzen (Kälte- oder Trockenstress).
Zur Kältestressbehandlung werden die Pflanzen für 14 Tage unter folgenden kontrollierten Bedingungen gehalten:

"Tag": 12 Stunden beleuchtet bei 8°C
"Nacht": 12 Stunden ohne Beleuchtung bei 1°C.

Der Trockenstreß wird durch langsames Abtrocknen unter folgenden Bedingungen induziert:

"Tag": 14 Stunden beleuchtet bei 26°C
"Nacht": 10 Stunden ohne Beleuchtung bei 18°C.

Die Kältestressphase wird nach genau 14 Tagen beendet. Die Dauer der Trockenstressphase richtet sich
hauptsächlich nach dem Zustand der unbehandelten, gestressten Kontrollpflanzen und variiert somit von Kultur zu
Kultur. Sie wird (durch Wiederbewässerung) beendet, sobald irreversible Schäden an den unbehandelten, gestressten
Kontrollpflanzen zu beobachten sind. Bei dikotylen Kulturen wie beispielsweise Raps und Soja variiert die Dauer der
Trockenstreßphase zwischen 4 und 6 Tagen, bei monokotylen Kulturen wie beispielweise Weizen, Gerste oder Mais
zwischen 6 und 10 Tagen.
Nach Beendigung der Stressphase folgt eine 7tägige Erholungsphase, während der die Pflanzen abermals
unter guten Wachstumsbedingungen im Gewächshaus gehalten werden.
Um auszuschließen, daß die beobachteten Effekte von der ggf. fungiziden Wirkung der Testverbindungen
beeinflußt werden, wird zudem darauf geachtet, daß die Versuche ohne Pilzinfektion bzw. ohne Infektionsdruck ablaufen.
Nach Beendigung der Erholungsphase werden die Schadintensitäten visuell im Vergleich zu unbehandelten,
ungestressten Kontrollen gleichen Alters (bei Trockenstreß) bzw. gleichen Wuchsstadiums (bei Kältestreß) bonitiert.
Die Erfassung der Schadintensität erfolgt zunächst prozentual (100% = Pflanzen sind abgestorben, 0 % = wie Kontrollpflanzen). Aus diesen Werten wird sodann der Wirkungsgrad der Testverbindungen (= prozentuale Reduktion der
Schadintensität durch Substanzapplikation) nach folgender Formel ermittelt:

$$WG = \frac{(SW_{ug} - SW_{bg}) \times 100}{SW_{ug}}$$

WG: Wirkungsgrad (%)
$SW_{ug}$: Schadwert der unbehandelten, gestressten Kontrolle
$SW_{bg}$: Schadwert der mit Testverbindung behandelten Pflanzen

In untenstehender Tabelle sind jeweils Mittelwerte aus drei Ergebniswerten des gleichen Versuches aufgeführt. Folgende Ergebnisse wurden mit den erfindungsgemäßen Verbindungen unter Trockenstressbedingungen erreicht:
(1) Ergbnisse der Einzelsubstanzen

| Testobjekt | BRSNS | | HORVS | | ZEAMX | |
|---|---|---|---|---|---|---|
| Streßtyp | Trocken | | Trocken | | Trocken | |
| Dosierung (je Testsubstanz; g/ha) | 250 | 100 | 250 | 100 | 250 | 100 |
| Tebuconazol | 42 | 27 | | | 30 | |
| Metconazol | | 50 | | | | |
| Prothioconazol | | 12 | | 11 | | 12 |

(2) Ergebnisse in Kombination mit ABA

| Testobjekt | BRSNS | | HORVS | | ZEAMX | | ZEAMX | |
|---|---|---|---|---|---|---|---|---|
| Streßtyp | Trocken | | Trocken | | Trocken | | Kälte | |
| Dosierung (je Testsubstanz; g/ha) | 250 | 100 | 250 | 100 | 250 | 100 | 250 | 100 |
| Tebuconazole + ABA | 65 | 62 | 33 | 22 | 33 | 26 | | |
| Metconazole + ABA | | | 44 | 33 | | 23 | | |
| Prothioconazole + ABA | 65 | 42 | 33 | 33 | | | 37 | |
| Abkürzungen:<br>BRSNS: Raps (Brassica napus)<br>HORVS: Gerste (Hordeum vulgare)<br>ZEAMX: Mais (Zea mais) | | | | | | | | |

Wie die Ergebnisse zeigen, haben erfindungsgemäße Verbindungen eine gute Wirksamkeit gegen abiotischen Streß. So zeigen die erfindungsgemäßen Verbindungen bei Aufwandmengen von 0.25 kg und weniger Aktivsubstanz pro Hektar beispielsweise eine hohe Wirksamkeit gegen Trockenstreß, sowohl an monokotylen Kulturpflanzen wie z.B. Gerste, als auch an dikotylen Kulturpflanzen wie z.B. Raps.

Wie die Ergebnisse weiterhin zeigen, kann die streßminderne Wirkung der erfindungsgemäßen Verbindungen zudem durch Zusatz von Abscisinsäure (ABA) signifikant erhöht werden.

Stauchung:

Wie bereits zuvor erwähnt, führen einige aus dem Stand der Technik bekannten Azole, welche in Kombination mit Abscisinsäure zur Erhöhung der pflanzlichen Resistenz gegenüber abiotischem Streß empfohlen werden (vgl. WO2007/008580 A; Diniconazol und Uniconazol) an einigen Kulturpflanzen wie beispielsweise Raps zu Stauchungen in unerwünschtem Maße.

Bei Anwendung der erfindungsgemäßen Azole tritt diese Stauchung in einem geringeren bzw. nicht unerwünschten Maß auf:

| Behandlung | Dosis | Mittlere Pflanzenhöhe (cm) |
|---|---|---|
| Vergleich | | 11,7 |
| Tebuconazol | 250 g/ha | 10,2 |
| Prothioconazol | 250 g/ha | 10,2 |
| Metconazol | 250 g/ha | 7,8 |

**Patentansprüche**

1. Verwendung mindestens einer Verbindung, ausgewählt aus der Gruppe, bestehend aus Tebuconazol, Metconazol und Prothioconazol zur Steigerung der Widerstandsfähigkeit von Pflanzen gegenüber abiotischen Stressfaktoren, wobei deren Verwendung in Kombination mit Abscisinsäure erfolgt.

2. Verwendung nach Anspruch 1, **dadurch gekennzeichnet, dass** mindestens eine Verbindung ausgewählt aus der Gruppe, bestehend aus Tebuconazol, Metconazol und Prothioconazol, in einer Aufwandmenge zwischen 0,01 und 3 kg/ha angewendet wird.

3. Verwendung nach Anspruch 2 , **dadurch gekennzeichnet, dass** die Abscisinsäure in einer Aufwandmenge zwischen 0.01 und 3 kg/ha angewendet wird.

4. Verwendung nach einem der Ansprüche 1 bis 3, **dadurch gekennzeichnet, dass** die behandelte Pflanze transgen ist.

5. Verwendung nach einem der Ansprüch1 bis 4, **dadurch gekennzeichnet, dass** diese in Kombination mit zumindest einem Düngemittel verwendet wird.

6. Sprühlösung zur Behandlung von Pflanzen, enthaltend eine zur Steigerung der Widerstandsfähigkeit von Pflanzen gegenüber abiotischen Stressfaktoren wirksame Menge von mindestens einer Verbindung, ausgewählt aus der Gruppe, bestehend aus Tebuconazol, Metconazol und Prothioconazol sowie als weiteren Bestandteil Abscisinsäure.

7. Sprühlösung nach Anspruch 6, **dadurch gekennzeichnet, dass** der Gehalt an der mindestens einen Verbindung gemäß einem der Ansprüche 1 oder 2 in der Sprühlösung 0,0005 bis 15 Gew.-%, bezogen auf das Gesamtgewicht der Sprühlösung, beträgt.

8. Sprühlösung nach Anspruch 7, **dadurch gekennzeichnet, dass** der Gehalt an Abscisinsäure 0,0005 bis 15 Gew.-%, bezogen auf das Gesamtgewicht der Sprühlösung, beträgt.

9. Verwendung von Sprühlösungen gemäß einem der Ansprüche 6 bis 8 zur Steigerung der Widerstandsfähigkeit von Pflanzen gegenüber abiotischen Stressfaktoren.

**Claims**

1. Use of at least one compound selected from the group consisting of tebuconazole, metconazole and prothioconazole for enhancing the resistance of plants to abiotic stress factors, in combination with abscisic acid.

2. Use according to Claim 1, **characterized in that** at least one compound selected from the group consisting of tebuconazole, metconazole and prothioconazole is employed in an application rate between 0.01 and 3 kg/ha.

3. Use according to Claim 2, **characterized in that** the abscisic acid is used in an application rate between 0.01 and 3 kg/ha.

4. Use according to any of Claims 1 to 3, **characterized in that** the plant treated is transgenic.

5. Use according to any of Claims 1 to 4, **characterized in that** the at least one compound is used in combination with at least one fertilizer.

6. Spray solution for treatment of plants, comprising an amount, effective for enhancement of the resistance of plants to abiotic stress factors, of at least one compound selected from the group consisting of tebuconazole, metconazole and prothioconazole and, as further constituent, abscisic acid.

7. Spray solution according to Claim 6, **characterized in that** the content of the at least one compound according to either of Claims 1 and 2 in the spray solution is 0.0005 to 15% by weight, based on the total weight of the spray solution.

8. Spray solution according to Claim 7, **characterized in that** the content of abscisic acid is 0.0005 to 15% by weight, based on the total weight of the spray solution.

9. Use of spray solutions according to any of Claims 6 to 8 for enhancing the resistance of plants to abiotic stress factors.

**Revendications**

1. Utilisation d'au moins un composé, choisi dans le groupe constitué par le tébuconazole, le metconazole et le prothioconazole pour augmenter la résistance de plantes aux facteurs de stress abiotique, l'utilisation ayant lieu en combinaison avec de l'acide abscissique.

2. Utilisation selon la revendication 1, **caractérisée en ce qu'**au moins un composé, choisi dans le groupe formé par le tébuconazole, le metconazole et le prothioconazole, est appliqué en une quantité d'utilisation entre 0,01 et 3 kg/ha.

3. Utilisation selon la revendication 2, **caractérisée en ce que** l'acide abscissique est appliqué en une quantité d'utilisation entre 0,01 et 3 kg/ha.

4. Utilisation selon l'une quelconque des revendications 1 à 3, **caractérisée en ce que** la plante traitée est transgénique.

5. Procédé selon l'une quelconque des revendications 1 à 4, **caractérisé en ce qu'**elle est utilisée en combinaison avec au moins un engrais.

6. Solution de pulvérisation pour le traitement de plantes, contenant une quantité, efficace pour augmenter la résistance de plantes aux facteurs de stress abiotique, d'au moins un composé choisi dans le groupe constitué par le tébuconazole, le metconazole et le prothioconazole ainsi que de l'acide abscissique comme autre constituant.

7. Solution de pulvérisation selon la revendication 6, **caractérisée en ce que** la teneur en ledit au moins un composé selon l'une quelconque des revendications 1 ou 2 dans la solution de pulvérisation est de 0,0005 à 15% en poids, par rapport au poids total de la solution de pulvérisation.

8. Solution de pulvérisation selon la revendication 7, **caractérisée en ce que** la teneur en acide abscissique est de 0,0005 à 15% en poids, par rapport au poids total de la solution de pulvérisation.

9. Utilisation de solutions de pulvérisation selon l'une quelconque des revendications 6 à 8 pour augmenter la résistance de plantes aux facteurs de stress abiotique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007008580 A
- CA 2119806
- JP 2003325063 A
- DE 3821520 A
- DE 128828 A4
- DE 1905834 A
- DE 19631764 A
- WO 1992005251 A
- WO 1995009910 A
- WO 199827806 A
- WO 2005002324 A
- WO 2006021972 A
- US 6229072 B
- WO 8910396 A
- WO 1991002069 A
- WO 200166704 A
- EP 0837944 A
- WO 2000066746 A
- WO 2000066747 A
- WO 2002026995 A
- US 5776760 A
- US 5463175 A
- WO 2002036782 A
- WO 2003092360 A
- WO 2005012515 A
- WO 2007024782 A
- WO 2001024615 A
- WO 2003013226 A
- US 5561236 A
- US 5648477 A
- US 5646024 A
- US 5273894 A
- US 5637489 A
- US 5276268 A
- US 5739082 A
- US 5908810 A
- US 7112665 B
- WO 1996038567 A
- WO 1999024585 A
- WO 1999024586 A
- WO 1999034008 A
- WO 200236787 A
- WO 2004024928 A
- US 5605011 A
- US 5378824 A
- US 5141870 A
- US 5013659 A
- US 5767361 A
- US 5731180 A
- US 5304732 A
- US 4761373 A
- US 5331107 A
- US 5928937 A
- WO 1996033270 A
- WO 2004040012 A
- WO 2004106529 A
- WO 2005020673 A
- WO 2005093093 A
- WO 2006007373 A
- WO 2006015376 A
- WO 2006024351 A
- WO 2006060634 A
- US 5084082 A
- WO 199741218 A
- US 5773702 A
- WO 1999057965 A
- US 5198599 A
- WO 2001065922 A
- WO 2007027777 A
- WO 199421795 A
- WO 2000004173 A
- EP 04077984 A
- EP 06009836 A
- WO 2004090140 A
- EP 04077624 A
- WO 2006133827 A
- EP 07002433 W
- EP 0571427 A
- WO 1995004826 A
- EP 0719338 A
- WO 199615248 A
- WO 199619581 A
- WO 199627674 A
- WO 199711188 A
- WO 199726362 A
- WO 199732985 A
- WO 199742328 A
- WO 199744472 A
- WO 199745545 A
- WO 199827212 A
- WO 199840503 A
- WO 9958688 A
- WO 199958690 A
- WO 199958654 A
- WO 2000008184 A
- WO 2000008185 A
- WO 200028052 A
- WO 200077229 A

- WO 200112782 A
- WO 200112826 A
- WO 2002101059 A
- WO 2003071860 A
- WO 2004056999 A
- WO 2005030942 A
- WO 2005030941 A
- WO 2005095632 A
- WO 2005095617 A
- WO 2005095619 A
- WO 2005095618 A
- WO 2005123927 A
- WO 2006018319 A
- WO 2006103107 A
- WO 2006108702 A
- WO 2007009823 A
- WO 200022140 A
- WO 2006063862 A
- WO 2006072603 A
- WO 2002034923 A
- EP 06090134 A
- EP 06090228 A
- EP 06090227 A
- EP 07090007 A
- EP 07090009 A
- WO 200114569 A
- WO 200279410 A
- WO 200333540 A
- WO 2004078983 A
- WO 200119975 A
- WO 199526407 A
- WO 199634968 A
- WO 199820145 A
- WO 199912950 A
- WO 199966050 A
- WO 199953072 A
- US 6734341 B
- WO 200011192 A
- WO 199822604 A
- WO 199832326 A
- WO 200198509 A
- WO 2005002359 A
- US 5824790 A
- US 6013861 A
- WO 1994004693 A

- WO 1994009144 A
- WO 199411520 A
- WO 199535026 A
- WO 199720936 A
- EP 0663956 A
- WO 1996001904 A
- WO 1996021023 A
- WO 1998039460 A
- WO 1999024593 A
- WO 1995031553 A
- US 2002031826 A
- US 6284479 B
- US 5712107 A
- WO 1997047806 A
- WO 1997047807 A
- WO 1997047808 A
- WO 200014249 A
- WO 200073422 A
- WO 2000047727 A
- EP 06077301 A
- US 5908975 A
- EP 0728213 A
- WO 2006032538 A
- WO 2007039314 A
- WO 2007039315 A
- WO 2007039316 A
- JP 2006304779 A
- WO 2005012529 A
- WO 1998000549 A
- WO 2004053219 A
- WO 2001017333 A
- WO 0245485 A
- WO 2005017157 A
- WO 2006136351 A
- US 5969169 A
- US 5840946 A
- US 6323392 B
- US 6063 A
- US 947 A
- US 6270828 B
- US 6169190 B
- US 5965755 A
- US 5434283 A
- WO 2004067528 A

**In der Beschreibung aufgeführte Nicht-Patentliteratur**

- Responses to Abiotic Stresses. **BRAY et al.** Biochemistry and Molecular Biology of Plants. American Society of Plant Physiologists, 2000, 1158-1203
- **BARTLETT et al.** Pest Manag Sci, 2002, vol. 60, 309
- Research Disclosure, 1985, vol. 259, 578-582

- **WU ; VON TIEDEMANN.** Environmental Pollution, 2002, vol. 116, 37-47
- **MORRISON ; ANDREWS.** J Plant Growth Regul, 1992, vol. 11, 113-117
- **SCHOPFER ; BRENNICKE.** Pflanzenphysiologie. Springer, 1999
- **JONES ; MANSFIELD.** J. Exp. Botany, 1970, vol. 21, 714-719

- **BONHAM-SMITH et al.** *Physiologia Plantarum,* 1988, vol. 73, 27-30
- **CHURCHILL et al.** *Plant Growth Regul,* 1998, vol. 25, 35-45
- **HUANG et al.** *Plant J,* 2007, vol. 50, 414-428
- Sterol Biosynthesis Inhibitors. **KUCK ; VORS.** Modern Crop Protection Compounds. Wiley-VCH, 2007, vol. 2, 605-650
- DMI-fungicides - side effects on the plant and problems of resistance. **BUCHENAUER.** Modern Selective Fungicides. Gustav Fischer Verlag, 1995, 259-290
- **KITAHATA et al.** *Bioorg. Med. Chem.,* 2005, vol. 13, 4491-4498
- **SAITO et al.** *Biosci. Biotechnol. Biochem.,* 2006, vol. 70, 1731-1739
- **ZHANG et al.** *Journal of Plant Physiology,* 2007, vol. 164, 709-717
- ab dem Stadium BBCH 10 gemäß der BBCH-Monografie der Biologische Bundesanstalt für Land und Forstwirtschaft. 2001
- Ullmann's Encyclopedia of Industrial Chemistry. Verlagsgesellschaft, 1987, vol. A 10, 323-431
- Ullmann's Encyclopedia of Industrial Chemistry. 1987, vol. A 10, 363-401
- **COMAI et al.** *Science,* 1983, vol. 221, 370-371
- **BARRY et al.** *Curr. Topics Plant Physiol.,* 1992, vol. 7, 139-145
- **SHAH et al.** *Science,* 1986, vol. 233, 478-481
- **GASSER et al.** *J. Biol. Chem.,* 1988, vol. 263, 4280-4289
- **TRANEL ; WRIGHT.** *Weed Science,* 2002, vol. 50, 700-712
- **VON CRICKMORE et al.** *Microbiology and Molecular Biology Reviews,* 1998, vol. 62, 807-813
- **MOELLENBECK et al.** *Nat. Biotechnol.,* 2001, vol. 19, 668-72
- **SCHNEPF et al.** *Applied Environm. Microb.,* 2006, vol. 71, 1765-1774
- **R. WEGLER.** Chemie der Pflanzenschutz- und Schädlingsbekämpfungsmittel. Springer Verlag, 1970, vol. 2, 401-412